# EUROPÄISCHE PATENTSCHRIFT

(11) **EP 0 356 702 B1**
(45) Veröffentlichungstag und Bekanntmachung des Hinweises auf die Patenterteilung: **08.06.1994**
(21) Anmeldenummer: 89113653.3
(22) Anmeldetag: 25.07.1989
(51) Int. Cl.: G01F 1/20, F04B 49/00

(54) **Anordnung zum Überwachen der Ausgangsströmung einer Dosierpumpe**
Arrangement for monitoring the output flow of a dosing pump
Disposition pour contrôler l'écoulement d'une pompe de dosage

(30) Priorität: 31.08.1988 DE 3829512
(43) Veröffentlichungstag der Anmeldung: 07.03.1990
(73) Patentinhaber: PROMINENT DOSIERTECHNIK GMBH, 69123 Heidelberg (DE)
(72) Erfinder: Berger, Hermann, D-6900 Heidelberg (DE)
(74) Vertreter: Knoblauch, Ulrich, Dr.-Ing.

(56) Entgegenhaltungen:
- DD-A- 220 661
- DE-A- 3 505 706

## Beschreibung

Die Erfindung bezieht sich auf eine Anordnung zum Überwachen der Ausgangsströmung einer Dosierpumpe für Flüssigkeiten, mit einem Fühler, der bei Anwesenheit eines nicht schwimmfähigen Schwebekörpers in einem aufwärts führenden Abschnitt einer Ausgangsleitung der Dosierpumpe, der einen Abstand von der Dosierpumpe aufweist, ein Anwesenheitssignal erzeugt, und mit einer Auswerteeinrichtung, der in Abhängigkeit von dem Anwesenheitssignal ein das Vorhandensein einer Ausgangsströmung bestätigendes Rückmeldesignal zugeführt wird und die beim Ausbleiben des Rückmeldesignals während einer vorbestimmten Anzahl n von Betriebsimpulsen, insbesondere Antriebsimpulsen, der Dosierpumpe ein Alarmsignal erzeugt.

Um das Auftreten der Ausgangsströmung einer Dosierpumpe, durch die mit jedem Pumpenhub eine Flüssigkeit in einer vorbestimmten Dosis einer anderen Flüssigkeit zugesetzt wird, zu überwachen, wenn bei Erzeugung eines Betriebsimpulses (Dosierimpulses) die Pumpe den gewünschten Pumpenhub ausgeführt hat, wird bei einer bekannten Anordnung der gattungsgemäßen Art, auch "Strömungswächter" genannt, die Bewegung des Schwebekörpers überwacht, der mit jedem Impuls der Strömung in der Ausgangsleitung angehoben wird und dann am Ende des Impulses wieder absinkt. Wenn der Schwebekörper in den Fühlbereich des Fühlers gelangt, erzeugt dieser das Anwesenheitssignal, das der Auswerteeinrichtung als Rückmeldesignal das Auftreten der Ausgangsströmung und damit eine fehlerfreie Dosierung der Pumpe signalisiert. Das Herabsinken des Schwebekörpers in der Ausgangsleitung ist jedoch nur bei Dosierflüssigkeiten gewährleistet, deren Viskosität hinreichend niedrig ist. Bei Dosierflüssigkeiten mit hoher Viskosität kann dagegen der Fall auftreten, daß der Schwebekörper nicht mehr jedem Pumpenhub folgt, sondern während des Dosierens in der Nähe der oberen Lage im Fühlbereich des Fühlers verbleibt, so daß das Anwesenheitssignal nicht verschwindet und das diesem entsprechende Rückmeldesignal andauert. Wenn jetzt während der Dauer des Rückmeldesignals die vorbestimmte Anzahl von Betriebsimpulsen der Dosierpumpe überschritten wird, erfolgt eine Störungsmeldung durch das Alarmsignal, obwohl die Dosierung einwandfrei ist.

Der Erfindung liegt die Aufgabe zugrunde, eine Anordnung der gattungsgemäßen Art anzugeben, die unabhängig von der Viskosität der Dosierflüssigkeit das Alarmsignal stets nur dann auslöst, wenn der Schwebekörper seine Ausgangslage beibehält.

Erfindungsgemäß ist diese Aufgabe dadurch gelöst, daß zwischen dem Fühler und der Auswerteeinrichtung ein durch ein Anwesenheitssignal des Fühlers verzögert einschaltbarer Rechteck-Oszillator angeordnet ist, der erst dann ein Ausgangssignal erzeugt, wenn das Anwesenheitssignal länger als seine Einschaltverzögerung andauert, und dessen Ausgangssignal mit dem Ausgangssignal des Fühlers durch ein ODER-Glied zu dem Rückmeldesignal verknüpft ist, und daß die Einschaltverzögerung des Rechteck-Oszillators etwa der Dauer eines Pumpzyklus entspricht.

Wenn bei dieser Lösung eine Dosierflüssigkeit mit geringer Viskosität verwendet wird, wird der Rechteck-Oszillator nicht ausgelöst, weil das Anwesenheitssignal durch die Rückbewegung des Schwebekörpers bereits wieder verschwunden ist, bevor die Einschaltverzögerung des Rechteck-Oszillators durch die Dauer des Anwesenheitssignals überschritten wird. Beim Verschwinden des Anwesenheitssignals wird mithin über das ODER-Glied das Rückmeldesignal ausgelöst, bevor der nächste Betriebsimpuls der Dosierpumpe erzeugt und mithin bevor die vorbestimmte Anzahl n von Betriebsimpulsen erzeugt wurde, selbst wenn n = 1 ist. Die Auswerteeinrichtung erzeugt folglich auch kein Alarmsignal, das eine Störung meldet. Wenn dagegen eine Flüssigkeit mit hoher Viskosität dosiert wird, verbleibt der Schwebekörper in der oberen Lage, so daß das Anwesenheitssignal länger als die Einschaltverzögerung des Rechteck-Oszillators andauert und nunmehr der Rechteck- Oszillator Rechteckimpulse erzeugt, die über das ODER- Glied der Auswerteeinrichtung zugeführt werden, so daß die Auswerteeinrichtung trotz andauernden Anwesenheitssignals des Fühlers ein pulsierendes Rückmeldesignal erhält, wodurch das Verschwinden des Anwesenheitssignals simuliert wird. Infolgedessen erfolgt keine Störungsmeldung, bevor das Anwesenheitssignal tatsächlich verschwindet, oder wenn das Anwesenheitssignal erzeugt wird, bevor die vorbestimmte Anzahl von Betriebsimpulsen der Dosierpumpe erzeugt worden ist. Vielmehr wird eine Störung nur dann signalisiert, wenn der Schwebekörper seine Ausgangs- oder Ruhelage beibehält.

Vorzugsweise ist dafür gesorgt, daß der Rechteck-Oszillator zwei NOR-Glieder mit jeweils zwei Eingängen und ein RC-Glied aufweist, daß der Ausgang des einen NOR-Gliedes mit dem einen Eingang des anderen NOR-Gliedes, über das RC-Glied mit dem Ausgang des anderen NOR-Gliedes und über den Widerstand des RC-Gliedes mit seinem einen Eingang verbunden ist, daß der andere Eingang des einen NOR-Gliedes mit dem Ausgang des Fühlers, mit dem anderen Eingang des anderen NOR-Gliedes und mit dem einen Eingang des ODER-Gliedes verbunden ist und daß der Ausgang des anderen NOR-Gliedes mit dem anderen Eingang des ODER-Gliedes verbunden ist. Dies ergibt eine einfache Ausbildung des Rechteck-Oszillators mit handelsüblichen Bauelementen.

Eine einfache Ausbildung der Auswerteeinrichtung kann darin bestehen, daß sie einen Zähler aufweist, der durch das Verschwinden eines Rückmeldesignals zurückstellbar und durch die Betriebsimpulse der Dosierpumpe weiterschaltbar ist, und daß an den Zähler ein Alarmsignalgeber angeschlossen ist, der bei Überschreitung des Zählwertes n auslösbar ist.

Sodann kann eine Weiterbildung darin bestehen, daß die Frequenz des Rechteck-Oszillators wenigstens gleich der Pulsfrequenz der Betriebsimpulse ist. Auf diese Weise ist sichergestellt, daß das Rückmeldesignal stets vor Erzeugung des nächsten Betriebsimpulses der Dosierpumpe erzeugt wird.

Sodann kann dafür gesorgt sein, daß das Rückmeldesignal dem Steuereingang eines mit einer elektrischen Lichtquelle in Reihe an einer Betriebsspannungsquelle liegenden Schaltgliedes zuführbar sind. Bei dieser Ausbildung leuchtet die Lichtquelle bei jedem Strömungsimpuls in der Ausgangsleitung der Dosierpumpe oder jedem durch den Rechteck-Oszillator simulierten Strömungsimpuls auf, um der Bedienungsperson durch das Blinken der Lichtquelle eine fehlerfreie Dosierung und beim Ausbleiben der Blinksignale eine fehlerhafte Dosierung anzuzeigen.

Eine einfache Ausgestaltung kann darin bestehen, daß der Fühler einen Hall-Generator und der Schwebekörper einen Dauermagneten aufweist.

Die Erfindung und ihre Weiterbildungen werden nachstehend anhand eines Blockschaltbildes eines bevorzugten Ausführungsbeispiels näher beschrieben.

Dargestellt ist eine elektromagnetische, eine Hubmembran aufweisende Dosierpumpe 1, deren Saugrohr 2 in einen Behälter 3 mit einer Flüssigkeit ragt, die über eine Ausgangsleitung 4 der Dosierpumpe 1 in vorbestimmten dosierten Mengen einer anderen Flüssigkeit zugesetzt werden soll. Um eine einwandfreie Dosierung sicherzustellen, die beispielsweise dann nicht gewährleistet wäre, wenn der Behälter 3 leer oder entleert worden ist oder die Dosierflüssigkeit nach längerer Stillstandszeit der Dosierpumpe in der Ausgangsleitung 4 in einen gasförmigen Zustand übergegangen ist, wird die Ausgangsströmung in der Ausgangsleitung 4 überwacht. Zu diesem Zweck ist in der vertikalen Ausgangsleitung 4 ein nicht schwimmfähiger Schwebekörper 5, hier ein stabförmiger Dauermagnet, und an einem Abschnitt 6 der Ausgangsleitung 4, der in einem vorbestimmten Abstand von der Dosierpumpe 1 oberhalb der Dosierpumpe 1 liegt, ein Fühler 7, hier ein Hall-Generator, angeordnet, der bei Anwesenheit des Schwebekörpers 5 im Abschnitt 6 ein Anwesenheitssignal, hier ein 0-Signal, an seinem Ausgang erzeugt, dagegen dann, wenn sich der Schwebekörper 5 außerhalb des Abschnitts 6 befindet, ein Abwesenheitssignal, hier ein 1-Signal, erzeugt. Der Fühler 7 wird aus einer Betriebsspannungsquelle, die eine Betriebsgleichspannung liefert, mit Betriebsspannung versorgt. Der Ausgang des Fühlers 7 ist zum einen mit einem Eingang eines verzögert nur auf ein eine vorbestimmte Dauer aufweisendes Anwesenheitssignal des Fühlers 7 ansprechenden Rechteck-Oszillators 9 und zum anderen mit dem einen von zwei Eingängen eines ODER-Gliedes 10 verbunden, das mit einem dem ODER-Glied 10 nachgeschalteten NICHT-Glied 11 ein NOR-Glied 12 bildet. Der Ausgang des Rechteck-Oszillators 9 ist mit dem anderen Eingang des ODER-Gliedes 10 bzw. des NOR-Gliedes 12 verbunden. Der Ausgang des Fühlers 7 ist ferner über einen hochohmigen Widerstand 13 mit dem positiven Pol der Betriebsspannungsquelle 8 verbunden.

Der Rechteck-Oszillator 9 enthält zwei NOR-Glieder 14 und 15 mit jeweils zwei Eingängen und ein RC-Glied, bestehend aus einem ohmschen Widerstand 16 und einem mit diesem in Reihe geschalteten Kondensator 17. Der Ausgang des NOR-Gliedes 14 ist mit dem einen Eingang des NOR-Gliedes 15 direkt, mit dem Ausgang des NOR-Gliedes 15 über das RC-Glied 16, 17 und über den Widerstand 16 sowie einen weiteren hochohmigen Widerstand 18, der in Reihe mit dem Widerstand 16 liegt, mit dem einen Eingang des NOR-Gliedes 14 verbunden. Der andere Eingang des NOR-Gliedes 14 bildet den Eingang des Rechteck-Oszillators 9 und ist daher mit dem Ausgang des Fühlers 7, mit dem anderen Eingang des NOR-Gliedes 15 und mit dem einen Eingang des ODER-Gliedes 10 verbunden. Ferner bildet der Ausgang des NOR-Gliedes 15 den Ausgang des Rechteck-Oszillators 9 und ist daher mit dem anderen Eingang des ODER-Gliedes 10 verbunden.

Eine Auswerteeinrichtung 19 enthält einen Zähler 20 und einen Alarmsignalgeber 21. Der Zähler 20 hat einen Rücksetzeingang R und einen Zähleingang C. Der Rücksetzeingang R ist mit dem Ausgang des NOR-Gliedes 12 bzw. des NICHT-Gliedes 11 und der Zähleingang C mit dem Ausgang eines Impulsgebers 22 verbunden, der Betriebsimpulse in Form von Antriebsimpulsen für die Dosierpumpe 1 erzeugt, so daß die Dosierpumpe 1 mit jedem Antriebsimpuls einen Hub ausführt.

Der Ausgang des NOR-Gliedes 12 ist ferner über einen Vorwiderstand 23 mit dem Steuereingang eines steuerbaren Schaltgliedes 24, hier eines Schalttransistors, verbunden, der in Reihe mit einer elektrischen Lichtquelle 25, hier einer Leuchtdiode, und einem Vorwiderstand 26 an der Betriebsspannungsquelle 8 liegt.

Der Alarmsignalgeber 21 ist an einem von mehreren Ausgängen des Zählers 20, hier am neunten Ausgang, angeschlossen, wobei an den Ausgängen des Zählers 20 nacheinander mit jedem Antriebsimpuls des Impulsgebers 22 ein Ausgangssignal auftritt, so daß nach dem achten Impuls des Impulsgebers 22, d.h. mit dem neunten Impuls, am neunten Ausgang des Zählers 20 ein Ausgangssignal auftritt, wenn der Zähler 20 nicht vorher durch einen 1-0-Übergang am Rücksetzeingang R zurückgesetzt worden ist, und den Alarmsignalgeber 21 einschaltet.

Beim ersten Antriebsimpuls des Impulsgebers 22 führt die Dosierpumpe 1 einen Hub aus, so daß eine dem Hub entsprechende Flüssigkeitsmenge aus dem Behälter 3 durch die Ausgangsleitung 4 gefördert wird und dabei den Schwebekörper 5 bis in den Abschnitt 6 mitreißt. Der Fühler 7 erzeugt daraufhin ein 0-Signal als Anwesenheitssignal. Dieses Anwesenheitssignal bewirkt, daß am Ausgang des ODER-Gliedes 10 ein Rückmeldesignal in Form eines 0-Signals für das Auftreten einer Strömung in der Ausgangsleitung 4 und am Ausgang des NICHT-Gliedes 11 bzw. des NOR-Gliedes 12 ein entsprechendes 1-Signal auftritt, weil auch am anderen Eingang des NOR-Gliedes 12 ein 0-Signal anliegt, solange sich der Kondensator 17 des RC-Gliedes 16, 17 noch nicht durch das gleichzeitig am Ausgang des NOR-Gliedes 14 auftretende positive 1-Signal aufgeladen hat. Dieses 1-Signal vom Ausgang des NOR-Gliedes 14 erzwingt ein 0-Signal am Ausgang des NOR-Gliedes 15. Die Zeitkonstante des RC-Gliedes 16, 17 ist so bemessen, daß bei hinreichend niedriger Viskosität der Flüssigkeit in der Ausgangsleitung 4 der Schwebekörper 5 wieder aus dem Abschnitt 6 herabgefallen ist, bevor der Kondensator 17 des RC-Gliedes 16, 17 so weit aufgeladen ist, daß er dem anderen Eingang des NOR-Gliedes 14 über den Widerstand 18 ein 1-Signal zuführen würde. Dementsprechend erzeugt der Fühler 7 bereits vor Ablauf der Ansprechverzögerung des Rechteck-Oszillators 9 wieder ein 1-Signal, das an den Ausgängen beider NOR-Glieder 14 und 15 jeweils ein 0-Signal erzwingt, so daß sich der Kondensator 17 wieder über den Widerstand 16 entlädt und das 0-Signal weiterhin am Ausgang des Rechteck-Oszillators 9 vorhanden bleibt.

Durch das Verschwinden des Anwesenheitssignals am Ausgang des Fühlers 7, d.h. das Auftreten eines 1-Signals an dem mit dem Fühler 7 verbundenen Eingang des NOR-Gliedes 12, wird dem Rücksetzeingang R des Zählers 20 ein 0-Signal zugeführt, das den Zähler 20 wieder zurückstellt, bevor der nächste Impuls des Impulsgebers 22 erzeugt wird. Mit dem nächsten Impuls des Impulsgebers 22 wiederholt sich dieser Vorgang, wobei die Leuchtdiode 25 während der Dauer jedes Anwesenheitssignals einmal aufblinkt.

Wenn die Flüssigkeit in der Ausgangsleitung 4 jedoch eine höhere Viskosität aufweist, so daß der Schwebekörper 5 bis zum nächsten Hub nicht wieder bis unter den Abschnitt 6 herabgesunken ist, erzeugt der Fühler 7 ständig ein Anwesenheitssignal, solange die Dosierpumpe 1 in Betrieb ist und die Flüssigkeit durch die Ausgangsleitung 4 strömt. Während der Dauer dieses Anwesenheitssignals sind mithin die mit dem Ausgang des Fühlers 7 verbundenen Eingänge aller drei NOR-Glieder 12, 14 und 15 mit einem 0-Signal belegt, während der Rechteck-Oszillator 9 nunmehr an seinem Ausgang Rechteck-Impulse erzeugt, weil sich der Kondensator 17 beim Auftreten eines 1-Signals am Ausgang des NOR-Gliedes 14 auflädt, bis das dem NOR-Glied 14 durch den Kondensator 17 zugeführte 1-Signal am Ausgang des NOR-Gliedes 14 wieder ein 0-Signal erzwingt und sich der Kondensator 17 wieder entlädt und mit umgekehrter Polarität auflädt. Dadurch treten am Ausgang des NOR-Gliedes 15 bzw. des Rechteck-Oszillators 9 abwechselnd 1- und 0-Signale auf. Dementsprechend erzeugt auch das ODER-Glied 10 mit der gleichen Pulsfrequenz wie der Rechteck-Oszillator 9 entsprechende Rechteck-Signale, die als Rückmeldesignale wirken und den Zähler 20 mit jedem Impuls zurücksetzen sowie die Leuchtdiode 25 aufleuchten lassen. Hierbei ist die Pulsfrequenz des Rechteck-Oszillators 9 so gewählt, daß sie gleich oder größer als die Pulsfrequenz des Impulsgebers 22 ist. Die Rücksetzung des Zählers 20 erfolgt dann mit der Rückflanke jedes Ausgangsimpulses des NOR-Gliedes 12, bevor der nächste Impuls des Impulsgebers 22 auftritt.

Wenn der Schwebekörper 5 dagegen in der dargestellten unteren Lage bleibt, obwohl der Impulsgeber 22 Antriebsimpulse für die Dosierpumpe 1 erzeugt, bedeutet dies, daß keine Strömung in der Ausgangsleitung 4 auftritt, z.B. weil die Dosierflüssigkeit aufgebraucht oder in der Ausgangsleitung in Gas übergegangen ist. Hierbei führt die Dosierpumpe 1 Leerhübe aus, und der Fühler 7 erzeugt kein Anwesenheitssignal, sondern ein 1-Signal. Dementsprechend wird auch der Rechteck-Oszillator 9 nicht eingeschaltet, und das NOR-Glied 12 erzeugt ständig ein 0-Signal. Der Zähler 22 wird daher durch die Impulse des Impulsgebers 22 ständig weitergeschaltet, bis schließlich nach dem achten Leerhub der Dosierpumpe 1 am neunten Ausgang des Zählers 20 ein Signal auftritt, das den Alarmsignalgeber 21 auslöst.

Solange kein Rückmeldesignal durch das ODER-Glied 10 erzeugt wird, bleibt auch die Leuchtdiode 25 ausgeschaltet.

Auf diese Weise wird nicht nur das Fehlen einer Strömung in der Ausgangsleitung 4, sondern auch ein möglicher Defekt der Dosierpumpe 1 festgestellt.

Abwandlungen des dargestellten Ausführungsbeispiels können beispielsweise darin bestehen, daß der Fühler 7 unterhalb des Abschnitts 6 der Ausgangsleitung 4 in der Nähe der Pumpe 1 angeordnet und so ausgebildet wird, daß er ein 0-Signal erzeugt, wenn der Schwebekörper 5 zwar im Abschnitt 6 anwesend ist, aber außerhalb des Fühlbereichs des Fühlers 7 liegt, d.h. daß der Fühler 7 die Abwesenheit des Schwimmkörpers 5 am Ausgang der Dosierpumpe 1 durch ein 0-Signal anzeigt, das der Anwesenheit des Schwimmkörpers 5 im Abschnitt 6 entspricht.

Anstelle einer magnetisch betätigten Dosierpumpe 1 kann auch eine motorbetriebene Dosierpumpe 1 verwendet werden, z.B. eine Kolbenpumpe, bei der dann die Kolbenhübe der Dosierpumpe durch einen zusätzlichen Fühler überwacht werden, der bei jedem Kolbenhub einen den Betrieb der Dosierpumpe anzeigenden Betriebsimpuls erzeugt und diesen Impuls dem Zähleingang des Zählers 20 zuführt.

Ferner kann der Fühler 7 anstelle eines Hall-Generators auch eine andere Art von Anwesenheits- oder Annäherungsfühler aufweisen, z.B. einen Reed-Kontakt, einen induktiven Fühler, einen kapazitiven Fühler oder einen Licht-Fühler (Lichtschranke). Hierbei braucht der Schwebekörper 5 nicht notwendigerweise als Dauermagnet ausgebildet zu sein (abgesehen von der Verwendung eines Reed-Kontakts), sondern er kann auch ein entsprechendes anderes Material aufweisen.

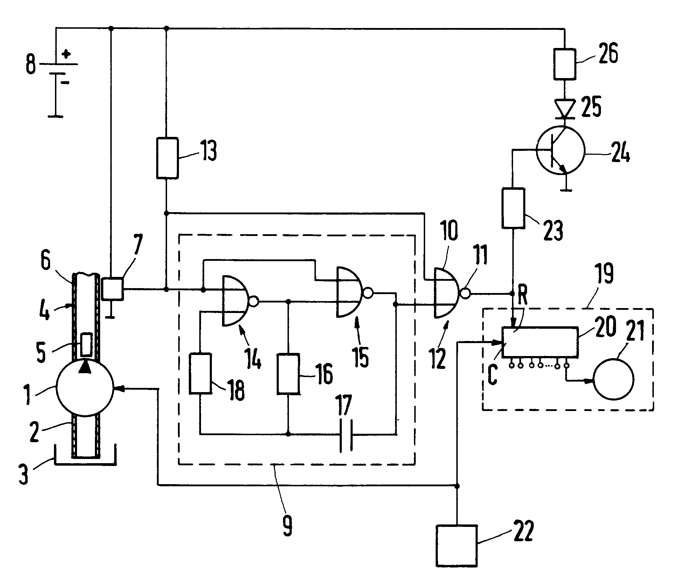

## Patentansprüche

1. Anordnung zum Überwachen der Ausgangsströmung einer Dosierpumpe (1) für Flüssigkeiten, mit einem Fühler (7), der bei Anwesenheit eines nicht schwimmfähigen Schwebekörpers (5) in einem aufwärts führenden Abschnitt einer Ausgangsleitung (4) der Dosierpumpe, der einen Abstand von der Dosierpumpe aufweist, ein Anwesenheitssignal erzeugt, und mit einer Auswerteeinrichtung (19), der in Abhängigkeit vom Anwesenheitssignal ein das Vorhandensein einer Ausgangsströmung bestätigendes Rückmeldesignal zugeführt wird und die beim Ausbleiben des Rückmeldesignals während einer vorbestimmten Anzahl n von Betriebsimpulsen, insbesondere Antriebsimpulsen, der Dosierpumpe ein Alarmsignal erzeugt, **dadurch gekennzeichnet,** daß zwischen dem Fühler (7) und der Auswerteeinrichtung (19) ein durch ein Anwesenheitssignal des Fühlers (7) verzögert einschaltbarer Rechteck-Oszillator (9) angeordnet ist, der erst dann ein Ausgangssignal erzeugt, wenn das Anwesenheitssignal länger als seine Einschaltverzögerung andauert, und dessen Ausgangssignal mit dem Ausgangssignal des Fühlers (7) durch ein ODER-Glied (10) zu dem Rückmeldesignal verknüpft ist, und daß die Einschaltverzögerung des Rechteck-Oszillators (9) etwa der Dauer eines Pumpzyklus entspricht.

2. Anordnung nach Anspruch 1, dadurch gekennzeichnet, daß der Rechteck-Oszillator (9) zwei NOR-Glieder (14, 15) mit jeweils zwei Eingängen und ein RC-Glied (16, 17) aufweist, daß der Ausgang des einen NOR-Gliedes (14) mit dem einen Eingang des anderen NOR-Gliedes (15), über das RC-Glied (16,17) mit dem Ausgang des anderen NOR-Gliedes (15) und über den Widerstand (16) des RC-Gliedes (16,17) mit seinem einen Eingang verbunden ist, daß der andere Eingang des einen NOR-Gliedes (14) mit dem Ausgang des Fühlers (7), mit dem anderen Eingang des anderen NOR-Gliedes (15) und mit dem einen Eingang des ODER-Gliedes (10) verbunden ist und daß der Ausgang des anderen NOR-Gliedes (15) mit dem anderen Eingang des ODER-Gliedes (10) verbunden ist.

3. Anordnung nach Anspruch 1 oder 2, dadurch gekennzeichnet, daß die Auswerteeinrichtung (19) einen Zähler (20) aufweist, der durch das Verschwinden eines Rückmeldesignals zurückstellbar und durch die Betriebsimpulse der Dosierpumpe (1) weiterschaltbar ist, und daß an den Zähler (20) ein Alarmsignalgeber (21) angeschlossen ist, der bei Überschreitung des Zählwertes n auslösbar ist.

4. Anordnung nach einem der Ansprüche 1 bis 3, dadurch gekennzeichnet, daß die Frequenz des Rechteck-Oszillators (9) wenigstens gleich der Pulsfrequenz der Betriebsimpulse ist.

5. Anordnung nach einem der Ansprüche 1 bis 4, dadurch gekennzeichnet, daß das Rückmeldesignal dem Steuereingang eines mit einer elektrischen Lichtquelle (25) in Reihe an einer Betriebsspannungsquelle (8) liegenden Schaltgliedes (24) zuführbar sind.

6. Anordnung nach einem der Ansprüche 1 bis 5, dadurch gekennzeichnet, daß der Fühler (7) einen Hall-Generator und der Schwebekörper (5) einen Dauermagneten aufweist.

## Claims

1. An arrangement for monitoring the output flow of a metering pump (1) for liquids, having a sensing device (7) which produces a present-signal in the presence of a non-floatable suspended solid element (5) in an outwards-leading portion of an output line (4) of the metering pump, which portion comprises a spacing from the metering pump, and having an evaluating device (19) to which, in dependence upon the present-signal, a repeating signal confirming the presence of an output flow is supplied, and which evaluating device produces an alarm signal if the repeating signal does not occur during a predetermined number n of operating pulses, in particular driving pulses, of the metering pump, **characterised in that** between the sensing device (7) and the evaluating device (19) a rectangular oscillator (9) is disposed which is switched on after a time delay by a present-signal of the sensing device (7) and only produces an output signal when the present-signal lasts longer than the delay for its switching on, and the output signal of which oscillator is connected with the output signal of the sensing device (7) to the repeating signal by an OR member (10), and that the switching-on delay of the rectangular oscillator (9) corresponds approximately to the duration of a pump cycle.

2. An arrangement according to claim 1, characterised in that the rectangular oscillator (9) comprises two NOR members (14, 15) having respectively two inputs and a RC member (16, 17), that the output of one of the NOR members (14) is connected to one of the inputs of the other NOR member (15), by way of the RC member (16, 17) to the output of the other NOR member (15) and by way of the resistor (16) of the RC member (16, 17) to one of its inputs, that the other input of one of the NOR members (14) is connected to the output of the sensing device (7), to the other input of the other NOR member (15) and to the input of the OR member (10), and that the output of the other NOR member (15) is connected to the other input of the OR member (10).

3. An arrangement according to claim 1 or 2, characterised in that the evaluating device (19) comprises a counting device (20) which can be reset by the disappearance of a repeating signal and can be stepped up by the operating pulses of the metering pump (1), and that an alarm signal transmitter (21) is connected at the counting device, which transmitter can be triggered when the numerical value n is exceeded.

4. An arrangement according to any one of claims 1 to 3, characterised in that the frequency of the rectangular oscillator (9) is at least equal to the pulse frequency of the operating pulses.

5. An arrangement according to any one of claims 1 to 4, characterised in that the repeating signal can be supplied to the control input of a switching member (24) lying with an electric light source (25) in a line at an operating voltage source (8).

6. An arrangement according to any one of claims 1 to 5, characterised in that the sensing device (7) comprises a Hall generator and the suspended solid element (5) comprises a permanent magnet.

## Revendications

1. Dispositif pour contrôler ou surveiller l'écoulement de sortie d'une pompe (1) de dosage de fluides, comprenant un capteur (7) qui engendre un signal de présence lorsqu'un corps (5) en suspension, inapte à flotter, est présent dans un tronçon, menant vers l'amont,d'un conduit de sortie (4) de la pompe de dosage, distant de cette pompe de dosage ; et un dispositif d'interprétation (19) auquel est appliqué, en fonction du signal de présence, un signal de réplique attestant la présence d'un écoulement de sortie, ce dispositif engendrant un signal d'alarme en l'absence du signal de réplique durant un nombre prédéterminé n d'impulsions de fonctionnement, notamment d'impulsions d'entraînement de la pompe de dosage, caractérisé par le fait qu'un oscillateur rectangulaire (9), interposé entre le capteur (7) et le dispositif d'interprétation (19) et pouvant être enclenché, avec temporisation, par un signal de présence du capteur (7), n'engendre un signal de sortie que lorsque le signal de présence dure plus longtemps que sa temporisation d'enclenchement, oscillateur dont le signal de sortie est combiné au signal de sortie du capteur (7), par l'intermédiaire d'un organe OU (10), pour donner le signal de réplique ; et par le fait que la temporisation d'enclenchement de l'oscillateur rectangulaire (9) correspond sensiblement à la durée d'un cycle de pompage.

2. Dispositif selon la revendication 1, caractérisé par le fait que l'oscillateur rectangulaire (9) présente un organe ou circuit (16,17) de type RC,et deux organes ou circuits NON-OU (14,15) comportant respectivement deux entrées ; par le fait que la sortie de l'un (14) des organes NON-OU est raccordée à l'une des entrées de l'autre organe NON-OU (15), est raccordée, par l'intermédiaire de l'organe (16, 17) de type RC, à la sortie de l'autre organe NON-OU (15), et est raccordée, par l'intermédiaire de la résistance (16) de l'organe (16, 17) de type RC, à l'une de ses entrées ; par le fait que l'autre entrée de l'un (14) des organes NON-OU est raccordée à la sortie du capteur (7), à l'autre entrée de l'autre organe NON-OU (15) et à l'une des entrées de l'organe OU (10) ; et par le fait que la sortie de l'autre organe NON-OU (15) est raccordée à l'autre entrée de l'organe OU (10).

3. Dispositif selon la revendication 1 ou 2, caractérisé par le fait que le dispositif d'interprétation (19) comporte un compteur (20) pouvant être remis à zéro par la disparition d'un signal de réplique, et pouvant demeurer enclenché par les impulsions de fonctionnement de la pompe de dosage (1) ; et par le fait qu'un générateur (21) de signaux d'alarme, connecté au compteur (20), peut être déclenché lors d'un dépassement de la valeur de comptage n.

4. Dispositif selon l'une des revendications 1 à 3, caractérisé par le fait que la fréquence de l'oscillateur rectangulaire (9) est au moins égale à la fréquence pulsatoire des impulsions de fonctionnement.

5. Dispositif selon l'une des revendications 1 à 4, caractérisé par le fait que le signal de réplique peut être appliqué à l'entrée de commande d'un organe de commutation (24) raccordé en série, avec une source lumineuse électrique (25), à une source (8) de tension de service.

6. Dispositif selon l'une des revendications 1 à 5, caractérisé par le fait que le capteur (7) présente un générateur de Hall, et le corps (5) en suspension présente un aimant permanent.
